# EUROPEAN PATENT SPECIFICATION

(11) **EP 2 931 589 B1**
(45) Date of publication and mention of the grant of the patent: **29.07.2020**
(21) Application number: 12820933.5
(22) Date of filing: 19.12.2012
(51) Int. Cl.: B62J 1/08, B23P 11/02

(54) **METHOD FOR CONNECTING A SADDLE TO A SEAT POST**
VERFAHREN ZUM VERBINDEN EINES SATTELS MIT EINER SATTELSTÜTZE
PROCÉDÉ POUR CONNECTER UNE SELLE À UNE TIGE DE SELLE

(30) Priority: 17.12.2012 IT PD20120384
(43) Date of publication of application: 21.10.2015
(73) Proprietor: Selle S.M.P. S.A.S. Di M. Schiavon, 35020 Casalserugo (IT)
(72) Inventor: SCHIAVON, Franco, I-35020 Casalserugo (PD) (IT); SCHIAVON, Maurizio, I-35020 Casalserugo (PD) (IT)
(74) Representative: Vinci, Marcello
(86) International application number: PCT/IB2012/057459
(87) International publication number: WO 2014/096903

(56) References cited:
- DE-A1- 4 420 772
- GB-A- 2 455 565
- JP-U- S6 075 188
- KR-A- 20110 007 675
- US-A- 3 476 496
- US-A- 5 509 751
- US-A- 5 657 958
- US-A1- 2010 066 134
- US-A1- 2011 241 389
- US-B1- 6 702 376

## Description

The present patent concerns seat post or saddle pillar units for bicycles and in particular it concerns a seat post for bicycles, with quick coupling and provided with anti slip elements. The invention is a method for connecting a saddle to a seat post.

The seat post units for bicycles of the known type have the function to constrain the saddle to the frame and generally comprise a substantially rectilinear tubular element or tube that is suited to be installed on the bicycle frame and in particular is suited to be axially inserted in the seat tube of the frame with one end and to slide axially in the tube so as to allow the saddle height to be adjusted.

In proximity to said end that is inserted in the seat tube, said seat post is provided with means for adjusting the height of the seat post and of the seat with respect to the seat tube, that is, with respect to the frame.

Said seat post comprises, at the opposite end, means for fixing it to the saddle, which is in turn usually provided with a rigid or semi-rigid casing, the underside of which is equipped with a small frame and/or means for coupling to the post, while its upper side is provided with a seat padding.

The seat posts of the known type are commonly made with a metallic material or alloys.

Various types of seat posts are known, provided with various types of means for coupling them to the saddle.

In particular, seat posts of the candle type are known, comprising a substantially rectilinear tubular body, wherein the end that is coupled to the saddle is specially shaped so that it simply engages through interference into a suitable housing obtained in the saddle's hollow.

Said coupling end has a substantially circular cross section that is reduced with respect to the rest of the body of the post, obtained by pinching the cylindrical wall of said end in one or more points, for example diametrically opposite points.

The coupling end has thus a partially circular cross section with one or usually two diametrically opposite projections and is suited to be inserted in said apposite housing, correspondingly shaped, provided in the saddle casing, usually made of plastic, so that any relative rotation between the seat post and the seat around the seat post axis is prevented.

Patent US2011/241389 is known, which discloses a metal seat post provided with upper notches parallel to the seat post axis, and wherein the underside of the saddle comprises partitions suited to be inserted in said notches. The surface of the post does not include any element suited to interfere with and fit in the walls of the housing in the seat.

Patent US2010/0066134 is known, which shows a seat post applied from above in a non-cylindrical housing. Said solution, in addition to being dangerous, as the non-slip function is assigned to a ring fixed to the underside, requires that the human body rests on the upper end of the post, thus nullifying the elasticity of the saddle.

Patent US 2011/241389 A1 discloses the preamble of claim 1.

As already explained, the union between the seat post and the saddle casing is obtained only through interference, as the end of the post is inserted in the housing in the saddle's hot casing, immediately after the hot moulding of the casing itself, and wherein, during the cooling of the plastic, this shrinks around the seat post due to its natural shrinking reaction, thus constraining the post in its position.

In the saddles of this type known at present, said housing in the casing comprises a substantially tubular wall, with radial stiffening ribs.

Said housing is suitable for the insertion of said coupling end of the seat post, shaped accordingly, with diametrically opposite recesses corresponding to said projections of the post's coupling end.

The candle-shaped seat posts with this type of coupling are used especially in children's bicycles, whose mechanical parts are subjected to limited stress, given the low weight of the user and the reduced dimensions of the frame.

Notwithstanding the reduced stress, however, couplings of this type can guarantee only a limited duration, and after a certain amount of time the saddle tends to slip out of the post.

In order to solve this problem, seat posts have been designed which are provided with external collars or clamps that constrain the post to the saddle, seat posts constrained to the casing by means of tear-away rivets or a screw inserted in holes obtained in the plastic housing/seat post unit, seat posts directly glued in the housing provided in the saddle's casing.

Said devices or constructive solutions involve higher costs and longer production and assembly times.

In order to overcome said drawbacks, a new type of seat post of the candle type with integrated anti slip elements has been designed and constructed.

The main object of the present invention, which is a method according to claim 1, is to guarantee that the seat post is firmly attached to the saddle's casing and cannot slip out of it.

Another object of the invention is to guarantee that the coupling can be obtained through simple hot insertion in the housing provided in the saddle's casing, with no need for further fixing operations.

Another object of the present invention is to reduce costs and production and assembly times as much as possible, thanks to the use of fixing clamps or collars or other methods. The anti slip elements, in fact, are integrated in the body of the seat post and are produced during its production process.

These and other direct and complementary objects are achieved with a seat post of the candle type with integrated non slip elements, comprising among its main parts a substantially linear tubular body with one end suited to be inserted and locked the seat tube of the frame and the opposite end suitable for coupling, shaped so that it can be engaged in the housing provided in a saddle's casing.

Said coupling end has a substantially circular cross section with one or more projections, obtained for example by pinching the cylindrical surface of said end, for example in diametrically opposite points.

Said coupling end is suited to be axially inserted in a tubular housing in the saddle's casing having matching size and shape, wherein said projections are inserted in corresponding recesses obtained in the wall of said tubular housing in the casing and have the function of preventing the rotation of said post with respect to said saddle around the post axis.

Said coupling end of the seat post also comprises one or more non slip elements that prevent the axial translation of the seat post with respect to the tubular housing in the direction of extraction of the seat post from the housing.

In the solution that is the object of the present patent, said anti slip elements comprise at least one discontinuous portion on the side wall of said coupling end, wherein after the hot insertion of said end in said housing, said plastic with which the casing is made cools down and interferes with said discontinuous portion, thus preventing the successive axial sliding of the seat post at least in the direction of extraction from the housing.

In a possible solution, said discontinuous portion comprises at least one hole or recess obtained in said wall of the coupling end, and wherein after hot insertion in the housing in the casing and after the cooling stage, the plastic partially enters said hole or recess, thus locking the seat post and preventing it from successively slipping out.

In a possible further solution, said discontinuous portion comprises at least one tooth or projection or ridge, obtained through deformation, or a tooth or projection applied and constrained in any way, for example by welding, glueing or another technique, and projecting from the outside of said wall of the coupling end.

During the axial insertion of the seat post in said tubular housing, said tooth cuts the wall of the housing but after hot insertion and cooling the plastic shrinks and interferes with the tooth and also with the surface of the coupling end of the seat post, preventing any successive slipping of the latter.

According to the invention, in order to further guarantee the anti slip function, said tooth or projection is in the shape of a hook or is of the saw tooth type, or can be in the shape of a portion of a sphere, or be semi-spherical, directed in such a way as to allow the insertion of the seat post in the housing but to prevent it from slipping out.

According to the invention, said coupling end of the post may also comprise one or more of said holes or recesses and one or more of said teeth or projections, or only projections.

Said integrated anti slip elements are made during the post's production process. The characteristics of the new seat post will be highlighted in greater detail in the following description, with reference to the attached drawings that are enclosed by way of non-limiting examples.

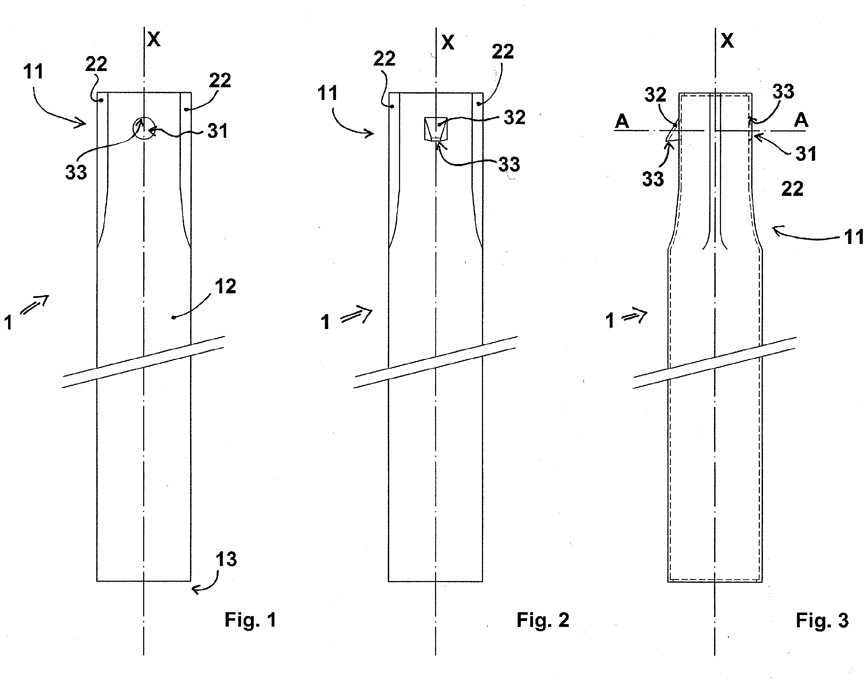

Figures 1, 2 and 3 show three side views of the new seat post (1). Figure 4 shows a top view of the coupling end (11), while Figure 5 shows a cross section A-A drawn at the level of the coupling end (11).

Figure 6 shows a schematic view of the underside of a saddle (S) of the known type, with the casing (S1) shaped so as to feature a housing (S2) suitable for the engagement of the coupling end (11) of the seat post (1) and radial stiffening ribs (S3).

Figure 7 shows a cross section of the coupling end (11) of the post (1) inserted in the tubular housing (S2) provided in the casing (S1) of the saddle (S).

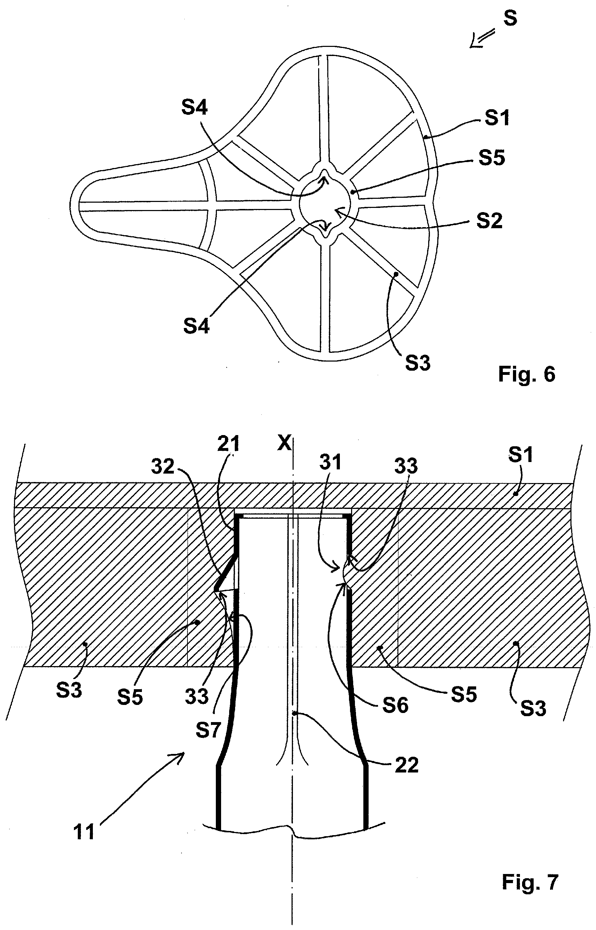

The seat post (1) is of the candle type, meaning that it comprises a substantially linear tubular body (12) with one end (13) suited to be inserted and locked in the seat tube of the bicycle frame, not shown in the figures, and the opposite end (11) suitable for coupling to the saddle (S), shown for example in Figure 6 and not being part of the present patent.

Said coupling end (11) of the seat post (1) is shaped in such a way that it fits in an apposite tubular housing (S2) in the casing (S1) of a saddle (S), wherein said casing (S1) is preferably made completely or partially of a plastic material.

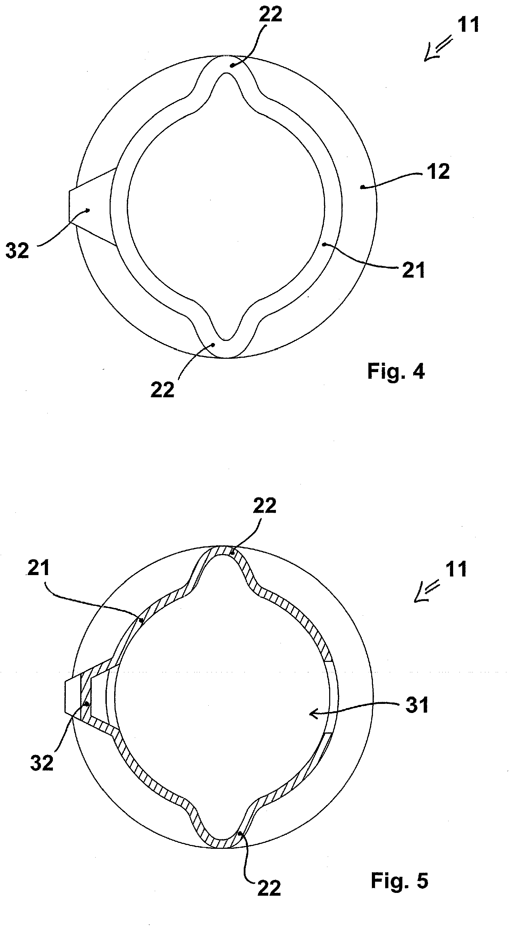

Said coupling end (11), as can be seen in Figures 4 and 5, comprises a substantially tubular wall (21) with substantially circular cross section having reduced diameter compared to said tubular body (12) of the rest of the seat post (1).

Said coupling end (11) is provided with one or more projections (22), arranged longitudinally along said wall (21), whose length is substantially equal to the length of said end (11).

Said longitudinal projections (22), for example, are obtained by pinching said tubular wall (21), for example in diametrically opposite points as shown in the figures, in a way that corresponds to the shape of said tubular housing (S2) in the casing (S1) of the saddle (S).

Said coupling end (11) is suited to be axially inserted in said tubular housing (S2) having size and shape corresponding to those of said coupling end (11), wherein said longitudinal projections (22) of the coupling end (11) fit in corresponding recesses or channels (S4) obtained in the wall (S5) of said tubular housing (S2).

In this way, once said coupling end (11) has been inserted in said housing (S2), said seat post (1) cannot rotate with respect to said saddle (S) around the axis (X) of the seat post (1).

Said coupling end (11) of the seat post (1) also comprises anti slip elements (31, 32) suited to prevent the translation of the seat post (1) in axial direction with respect to the tubular housing (S2) provided in the casing (S1) in the extraction direction.

Said anti slip elements comprise at least one discontinuous portion on the tubular wall (21) of said coupling end (11), such as a projection (32) or a recess (31), with at least one surface (33) not parallel to the axis (X) of the seat post (1) and suited to interfere with the tubular wall (S5) of said tubular housing (S2) in the casing (S1), wherein, after the hot insertion of said coupling end (11) in said housing (S2) in the casing (S1), the material with which the casing (S1) is made, typically plastic, cools down and interferes with said non axial surface (33), thus preventing the successive axial sliding of the seat post (1) at least in the direction of extraction from the housing (S2).

Said discontinuous portion may comprise, for example, a hole or recess (31) made in the wall (21) of the end (11) and/or a tooth or projection or ridge (32) in general on said wall (21).

In the example shown in Figure 7, said anti slip elements comprise at least one hole or recess (31) obtained in said wall (21) of the coupling end (11), wherein after hot insertion in the housing (S2) in the casing (S1) and after the cooling stage, the plastic partially (S6) gets in said hole or recess (31), locking the seat post (1) and preventing it from successively slipping out. Said hole (32), for example, is substantially circular or can have an elongated shape, or the shape of a slit or another suitable shape.

In the example shown in Figure 7, said anti slip elements also comprise at least one tooth or projection or ridge in general (32), projecting from the outside of said wall (21) of the coupling end (11) of the seat post (1).

Said projection (32) is preferably in the shape of a hook or is of the saw tooth type, or can be in the shape of a portion of a sphere, or be semi-spherical, directed in such a way as to allow the insertion of the seat post in the housing but to prevent it from slipping out..

Said tooth or projection (32) is obtained through deformation, for example acting from the inside, through the hole (31) made in a diametrically opposite position, breaking or without breaking the tubular wall (21) of the post's coupling end (11). Alternatively, said tooth or projection (32) is applied and in any case constrained to said end (11) of the seat post, for example by welding, glueing or another technique. During the axial insertion of the seat post (1) in said tubular housing (S2), said tooth (32) cuts the wall (S5) of the housing (S2) but, after hot insertion and after the cooling stage, the plastic shrinks, partially interfering (S7) with the tooth (32) and preventing the seat post from successively slipping out.

In a further example, said tooth (32) is positioned, with respect to said longitudinal projections (22), in such a way that, once inserted in the tubular housing (S2) provided in the casing (S1), said tooth (32) cuts said wall (S5) of the housing (S2) at the level of said ribs (S3) of the casing (S1), so as to avoid weakening the structure.

Therefore, with reference to the above description and the attached drawings, the following claims are expressed.

## Claims

1. Method for connecting a saddle (S) to a seat post (1), wherein:
- said saddle (S) is provided with a casing (S1) partially or completely made of a plastic material, in turn provided with an underside housing (S2) that is tubular with a circular cross section,
- said seat post (1) comprises a substantially linear tubular body (12) with one end (13) suited to be inserted and locked in the frame of a bicycle and the opposite end (11) having a tubular wall with a circular cross section corresponding to said underside housing (S2) and suited to be coupled with said underside housing (S2) provided in the saddle (S) from below,
said coupling end (11) being shaped so that it can be engaged in said underside housing (S2) in said casing (S1), said coupling end (11) of the seat post (1) comprising a discontinuous portion formed by at least one notch (31) and/or a projection (32), with at least one surface (33) not parallel to the longitudinal axis (X) of the seat post (1), which is suited to interfere with the tubular wall (S5) of said tubular housing (S2) provided in the casing (S1) to prevent the axial sliding of the seat post, at least in the direction of extraction from the housing (S2),
**characterized in that**
after the hot insertion of said coupling end (11) in said housing (S2) in the casing (S1) when this is still hot after extraction from the mould, the plastic material with which the casing (S1) is made cools down and interferes with said non axial surface (33) of said discontinuous portion (31, 32), locking the seat post (1) and preventing it from successively slipping out,
and wherein during the axial hot insertion of the seat post (1) in said tubular housing (S2), said projection in general (32) protruding from the outside of said wall (21) of the coupling end (11) cuts the wall (S5) of the housing (S2) and interferes with it after the cooling stage, thus preventing the seat post (1) from successively slipping out.

2. Method for connecting a saddle (S) to a seat post (1) according to claim 1, **characterized in that** said notch (31), made in said wall (21) of the coupling end (11) and comprising at least one surface (33) not parallel to the longitudinal axis (X) of the seat post (1), allows the introduction of part (S6) of the hot plastic material forming said wall (S5) of the tubular housing (S2) in the casing (S1), and wherein, after the hot insertion of the coupling end (11) in the housing (S2) provided in the casing (S1) and after the successive cooling of the plastic material, said notch (31) is suited to interfere with the tubular wall (S5) of said tubular housing (S2) in the casing (S1) and prevent the axial sliding of the seat post (1), at least in the direction of extraction from the housing (S2).

3. Method for connecting a saddle (S) to a seat post (1) according to claim 1, **characterized in that** said projection (32) is in the shape of a hook or a saw tooth or a sphere portion or a semi-sphere, directed so as to allow the coupling end (11) to be inserted in the housing (S2) but to prevent it from slipping out.

4. Method for connecting a saddle (S) to a seat post (1) according to claim 1 or 3 **characterized in that** said projection (32) is obtained by deforming said tubular wall (21) of the coupling end (11) towards the outside, breaking or without breaking the same.

5. Method for connecting a saddle (S) to a seat post (1) according to claim 1 or 3, **characterized in that** said projection (32) is applied and in any case constrained to the outside of said tubular wall (21) of the coupling end (11).

6. Method for connecting a saddle (S) to a seat post (1) according to any of the preceding claims, **characterized in that** said seat post (1) comprises at least one of said notch (31) and at least one of said projection (32) arranged on said tubular wall (21) in diametrically opposite positions.

7. Method for connecting a saddle (S) to a seat post (1) according to any of the preceding claims, **characterized in that** said tubular wall (21) of said coupling end (11) has a substantially circular cross section with reduced diameter compared to the diameter of said tubular body (12) of the rest of the seat post (1).

## Patentansprüche

1. Verfahren zur Verbindung eines Sattels (S) mit einer Sattelstütze (1), wobei:
- der besagte Sattel (S) mit einem Gehäuse (S1) versehen ist, das ganz oder teilweise aus Kunststoff besteht und seinerseits eine unterseitige Aufnahme (S2) aufweist, die röhrenförmig mit kreisförmigem Querschnitt ist,
- die besagte Sattelstütze (1) einen im Wesentlichen linearen röhrenförmigen Körper (12) umfasst, von dem ein Ende (13) dazu geeignet ist, in den Rahmen eines Fahrrads eingesetzt und fixiert zu werden, und dessen entgegengesetztes Ende (11) eine röhrenförmige Wand mit kreisförmigem Querschnitt aufweist, die der besagten unterseitigen Aufnahme (S2) entspricht, und dazu geeignet ist, von unten mit der besagten unterseitigen Aufnahme (S2) im Sattel (S) gekuppelt zu werden,
wobei das besagte Kupplungsende (11) so geformt ist, dass es in der besagten unterseitigen Aufnahme (S2) in dem besagten Gehäuse (S1) einrasten kann, wobei das besagte Kupplungsende (11) der besagten Sattelstütze (1) einen diskontinuierlichen Abschnitt umfasst, der aus wenigstens einer Kerbe (31) und/oder einem Vorsprung (32) gebildet ist, mit wenigstens einer nicht zu der Längsachse (X) der Sattelstütze (1) parallelen Oberfläche (33), die dazu geeignet ist, mit der röhrenförmigen Wand (S5) der besagten röhrenförmigen Aufnahme (S2) in dem Gehäuse (S1) zu interferieren, um das axiale Gleiten der Sattelstütze wenigstens in Auszugsrichtung aus der Aufnahme (S2) zu verhindern,
**dadurch gekennzeichnet, dass**
nach dem Heißeinsetzen des besagten Kupplungsendes (11) in die besagte Aufnahme (S2) in dem Gehäuse (S1), wenn dieses nach der Entnahme aus dem Formwerkzeug noch heiß ist, der Kunststoff, aus dem das Gehäuse (S1) besteht, abkühlt und mit der besagten nicht axialen Oberfläche (33) des besagten diskontinuierlichen Abschnitts (31, 32) interferiert, die Sattelstütze (1) fixiert und ihr anschließendes Herausrutschen verhindert,
und wobei während des axialen Heißeinsetzens der Sattelstütze (1) in die besagte röhrenförmige Aufnahme (S2) der besagte, generell aus der Außenseite der besagten Wand (21) des Kupplungsendes (11) herausragende Vorsprung (32) die Wand (S5) der Aufnahme (S2) schneidet und nach der Auskühlungsphase mit ihr interferiert, und damit das anschließende Herausrutschen der Sattelstütze (1) verhindert.

2. Verfahren zur Verbindung eines Sattels (S) mit einer Sattelstütze (1), nach Patentanspruch 1, **dadurch gekennzeichnet, dass** die besagte Kerbe (31), die in der besagten Wand (21) des Kupplungsendes (11) ausgeführt ist und wenigstens eine nicht zu der Längsachse (X) der Sattelstütze (1) parallelen Oberfläche (33) umfasst, das Einsetzen eines Teils (S6) des die besagte Wand (S5) der röhrenförmigen Aufnahme (S2) in dem Gehäuse (S1) bildenden, heißen Kunststoffs erlaubt, und wobei nach dem Heißeinsetzen des Kupplungsendes (11) in die Aufnahme (S2) in dem Gehäuse (S1) und nach dem anschließenden Abkühlen des Kunststoffs die besagte Kerbe (31) dazu geeignet ist, mit der röhrenförmigen Wand (S5) der besagten röhrenförmigen Aufnahme (S2) in dem Gehäuse (S1) zu interferieren und das axiale Gleiten der Sattelstütze (1) wenigstens in Auszugsrichtung aus der Aufnahme (S2) zu verhindern.

3. Verfahren zur Verbindung eines Sattels (S) mit einer Sattelstütze (1) nach Patentanspruch 1, **dadurch gekennzeichnet, dass** der besagte Vorsprung (32) die Form eines Hakens oder eines Sägezahns oder eines Kugelabschnitts oder einer Halbkugel hat, und so ausgerichtet ist, dass er es erlaubt, das Kupplungsende (11) in die Aufnahme (S2) einzusetzen, aber sein Herausrutschen verhindert.

4. Verfahren zur Verbindung eines Sattels (S) mit einer Sattelstütze (1) nach Patentanspruch 1 oder 3, **dadurch gekennzeichnet, dass** der besagte Vorsprung (32) durch Verformung der besagten röhrenförmigen Wand (21) des Kupplungsendes (11) nach außen gewonnen wird, unter Brechen oder ohne Brechen derselben.

5. Verfahren zur Verbindung eines Sattels (S) mit einer Sattelstütze (1) nach Patentanspruch 1 oder 3, **dadurch gekennzeichnet, dass** der besagte Vorsprung (32) an der Außenseite der besagten röhrenförmigen Wand (21) des Kupplungsendes (11) angebracht und in jedem Fall an ihr befestigt ist.

6. Verfahren zur Verbindung eines Sattels (S) mit einer Sattelstütze (1) nach einem jeden der vorstehenden Patentansprüche, **dadurch gekennzeichnet, dass** die besagte Sattelstütze (1) wenigstens eine der besagten Kerben (31) und wenigstens einen der besagten Vorsprünge (32) umfasst, die in einander diametral entgegengesetzten Positionen an der besagten röhrenförmigen Wand (21) angeordnet sind.

7. Verfahren zur Verbindung eines Sattels (S) mit einer Sattelstütze (1) nach einem jeden der vorstehenden Patentansprüche, **dadurch gekennzeichnet, dass** die besagte röhrenförmige Wand (21) des besagten Kupplungsendes (11) einen im Wesentlichen kreisförmigen Querschnitt mit im Vergleich zu dem Durchmesser des besagten röhrenförmigen Körpers (12) des Rests der Sattelstütze (1) reduziertem Durchmesser aufweist.

## Revendications

1. Méthode pour la connexion d'une selle (S) à un support de siège (1), où :
- ladite selle (S) est dotée d'un boîtier (S1) réalisé partiellement ou complètement en matériau plastique, doté à son tour d'un logement inférieur (S2) qui est tubulaire avec une section transversale circulaire,
- ledit support de siège (1) comprend un corps tubulaire essentiellement linéaire (12) avec une extrémité (13) apte à être insérée et bloquée dans le cadre d'un vélo et l'extrémité opposée (11) ayant une paroi tubulaire à section transversale circulaire correspondant audit logement inférieur (S2) et indiquée pour être accouplée audit logement inférieur (S2) réalisé sur la selle (S) d'en bas,
ladite extrémité d'accouplement (11) étant galbé de manière à ce qu'elle puisse être engagée dans ledit logement inférieur (S2) dans ledit boîtier (S1), ladite extrémité d'accouplement (11) dudit support de siège (1) comprenant une portion discontinue formée par au moins une entaille (31) et/ou une saillie (32), avec au moins une surface (33) non parallèle à l'axe longitudinal (X) du support de siège (1), qui est indiquée pour interférer avec la paroi tubulaire (S5) dudit logement tubulaire (S2) réalisé dans le boîtier (S1) afin d'empêcher le coulissement axial du support de siège, au moins dans la direction d'extraction du logement (S2),
**caractérisé en ce que**
après l'insertion à chaud de ladite extrémité d'accouplement (11) dans ledit logement (S2) dans le boîtier (S1) quand celui-ci est encore chaud après l'extraction du moule, le matériau plastique avec lequel le boîtier (S1) est réalisé se refroidit et interfère avec ladite surface non axiale (33) de ladite portion discontinue (31, 32), en bloquant le support de siège (1) et en empêchant qu'il puisse successivement sortir,
et où durant l'insertion axiale à chaud du support de siège (1) dans ledit logement tubulaire (S2), ladite saillie (32) généralement saillant de l'extérieur de ladite paroi (21) de l'extrémité d'accouplement (11) coupe la paroi (S5) du logement (S2) et interfère avec celle-ci après la phase de refroidissement, en empêchant ainsi que le support de siège (1) puisse successivement sortir.

2. Méthode pour la connexion d'une selle (S) à un support de siège (1) selon la revendication 1, **caractérisée en ce que** ladite entaille (31), réalisée sur ladite paroi (21) de l'extrémité d'accouplement (11) et comprenant au moins une surface (33) non parallèle à l'axe longitudinal (X) du support de siège (1), permet l'introduction d'une partie (S6) du matériau plastique chaud formant ladite paroi (S5) du logement tubulaire (S2) dans le boîtier (S1), et où, après l'introduction à chaud de l'extrémité d'accouplement (11) dans le logement (S2) réalisé sur le boîtier (S1) et après le refroidissement successif du matériau plastique, ladite entaille (31) est apte à interférer avec la paroi tubulaire (S5) dudit logement tubulaire (S2) dans le boîtier (S1) et empêcher le coulissement axial du support de siège (1), au moins dans la direction d'extraction du logement (S2).

3. Méthode pour la connexion d'une selle (S) à un support de siège (1) selon la revendication 1, **caractérisée en ce que** ladite saillie (32) présente la forme d'un crochet ou une dent de scie ou une portion de sphère ou une demi-sphère, dirigé de manière à consentir l'introduction de l'extrémité d'accouplement (11) dans le logement (S2) mais à empêcher que celle-ci puisse sortir.

4. Méthode pour la connexion d'une selle (S) à un support de siège (1) selon la revendication 1 ou 3, **caractérisée en ce que** ladite saillie (32) est obtenue en déformant ladite paroi tubulaire (21) de l'extrémité d'accouplement (11) vers l'extérieur, en la cassant ou en ne pas la cassant.

5. Méthode pour la connexion d'une selle (S) à un support de siège (1) selon la revendication 1 ou 3, **caractérisée en ce que** ladite saillie (32) est appliquée et de toute façon est bloquée extérieurement à ladite paroi tubulaire (21) de l'extrémité d'accouplement (11).

6. Méthode pour la connexion d'une selle (S) à un support de siège (1) selon l'une quelconque des revendications précédentes, **caractérisée en ce que** ledit support de siège (1) comprend au moins une desdites entailles (31) et au moins une desdites saillies (32) disposées sur ladite paroi tubulaire (21) dans des positions diamétralement opposées.

7. Méthode pour la connexion d'une selle (S) à un support de siège (1) selon l'une quelconque des revendications précédentes, **caractérisée en ce que** ladite paroi tubulaire (21) de ladite extrémité d'accouplement (11) présente une section transversale essentiellement circulaire avec un diamètre réduit par rapport au diamètre dudit corps tubulaire (12) du reste du support de siège (1).
